# EUROPÄISCHE PATENTSCHRIFT

(11) **EP 0 450 042 B1**
(45) Veröffentlichungstag und Bekanntmachung des Hinweises auf die Patenterteilung: **26.01.1994**
(21) Anmeldenummer: 90916260.4
(22) Anmeldetag: 26.10.1990
(51) Int. Cl.: G02C 5/12

(54) **Verfahren zur Herstellung eines Brillengestells aus Kunststoff**
Method of producing a plastics spectacle frame
Procédé pour la fabrication d'une monture de lunettes en plastique

(30) Priorität: 26.10.1989 DE 3935599; 15.06.1990 DE 4019085
(43) Veröffentlichungstag der Anmeldung: 09.10.1991
(73) Patentinhaber: FERDINAND MENRAD GMBH & CO. KG, D-73522 Schwäbisch Gmünd (DE)
(72) Erfinder: KÄSZMANN, Herbert, D-7920 Heidenheim 5 (DE); STEEB, Hermann, D-7072 Heubach (DE)
(74) Vertreter: Grättinger, Günter
(86) Internationale Anmeldenummer: EP9001918
(87) Internationale Veröffentlichungsnummer: WO9106885

(56) Entgegenhaltungen:
- EP-A- 0 109 054
- EP-A- 0 239 659
- DE-A- 0 714 781
- DE-A- 3 415 565
- DE-A- 3 523 981
- DE-A- 3 632 784
- DE-U- 8 912 656

## Beschreibung

Die Erfindung betrifft ein Verfahren zur Herstellung eines Brillengestells aus Kunststoff gemäß dem Oberbegriff von Anspruch 1.

Insbesondere durch die Einwirkung von Schweiß, Fett, Creme oder dgl. rutschen Kunststoffbrillen, deren Gestell eine glatte Oberfläche aufweist, beim Tragen bzw. bei ihrer Handhabung; als besonders störend wird das Verrutschen der aufgesetzten Brille nach unten oder seitlich infolge der Bewegung des Kopfes empfunden. Durch Silikonkörper im Bereich der Nasenstützen läßt sich das Verrutschen des Brillengestells in beträchtlichem Maße reduzieren.

Die EP-A-239 659 offenbart ein Brillengestell mit Nasenstützen, wobei die Nasenstützen Vertiefungen aufweisen, in welche flache Silikonkörper einsetzbar sind. Um eine Anpassung ein und desselben Brillengestells an verschiedene anatomische Verhältnisse je nach der Nasenrückenform des Brillenträgers zu ermöglichen, sind austauschbare Weichpads vorgesehen, welche in die Vertiefungen der Nasenstützen eingeclipt werden können. Diejenigen Pads, die sich als optimal herausgestellt haben, können ggfs. vom Brillenträger in die Vertiefungen eingeklebt werden.

Bei der Herstellung des Brillengestells gemäß der EP-A-239 659 sind beträchtliche Kosten damit verbunden, daß die Silikonkörper in gesonderten Formen hergestellt und gesondert gehandhabt werden müssen, nämlich der Form entnommen, geprüft, dem Brillengestell zugeordnet und in dieses eingesetzt; auch ist es möglich, daß bei der Herstellung der Silikonpads in gesonderten Formen die Herstellkosten belastender Ausschuß produziert wird.

Das DE-U-89 12 656 lehrt die Aufbringung eines Silikonfilms auf die beiden Nasenstützen eines Brillengestells. Ebenso wird, um den Sitz der Brille zu verbessern, nach dem DE-U-79 16 275 die Oberfläche des Brillengestells, soweit sie mit der Haut in Kontakt kommt, mit einer Haftschicht aus Silikon überzogen. Dabei handelt es sich um einen dünnen, auf eine Grundierschicht aufgetragenen Silikonfilm, der sich rasch abnutzt.

Demgegenüber liegt der vorliegenden Erfindung die Aufgabe zugrunde, ein Herstellverfahren für eine Kunststoffbrille mit guten und dauerhaften Haftungseigenschaften zu schaffen, welches bei geringen Herstellkosten für das Brillengestell zu einer besonders dauerhaften Verbindung der Silikonkörper mit den Nasenstützen führt.

Diese Aufgabe wird erfindungsgemäß durch die im Kennzeichen des Anspruchs 1 angegebenen Merkmale gelöst. Demnach werden die Silikonkörper durch Einfüllen des Silikons in Vertiefungen der Nasenstützen des Brillengestells mindestens bis die Vertiefung randvoll gefüllt ist, gebildet, nachdem zuvor eine Grundierung in den Vertiefungen aufgetragen wurde.

Tragetests mit derartigen Brillen haben die Eignung der Erfindung zur Lösung oben genannter Aufgabe und die außergewöhnlich lange Haltbarkeit der Silikonkörper bestätigt. Spezielle Untersuchungen hinsichtlich Schweißempfinglichkeit, Allergien oder Haftungsfestigkeit verliefen durchwegs positiv; eine Beschränkung des Haftbelags auf beide Pads des Brillengestells erwies sich als ausreichend.

Bevorzugt werden die Vertiefungen in das Brillengestell durch Warmumformen eingeprägt, besonders bevorzugt, bis sich die Vertiefungen einfassende Randwülste ausbilden. Dann wird eine Grundierung aufgetragen. Erst danach wird die Vertiefung mit zähflüssigem Silikon randvoll aufgefüllt, bis es dank seiner Oberflächenspannung eine leichte Wölbung nach außen bildet. Durch die randbündige Ausbildung des Silikonkörpers - noch verbessert durch die Ausbildung der die Vertiefung einfassenden Randwulst - ist der Silikonkörper gegen mechanische Beschädigung, z. B. durch Kratzen geschützt. Auch eine partielle Ablösung des Silikonkörpers wird dadurch vermieden.

Anhand der beigefügten Zeichnung wird die Erfindung näher erläutert. Es zeigt
Fig. 1 das Frontteil eines Brillengestells in der Ansicht von innen,
Fig. 2 ein Brillenpad in der Draufsicht und
Fig. 3 einen Längsschnitt durch den Brillenpad gemäß III-III der Fig. 2.

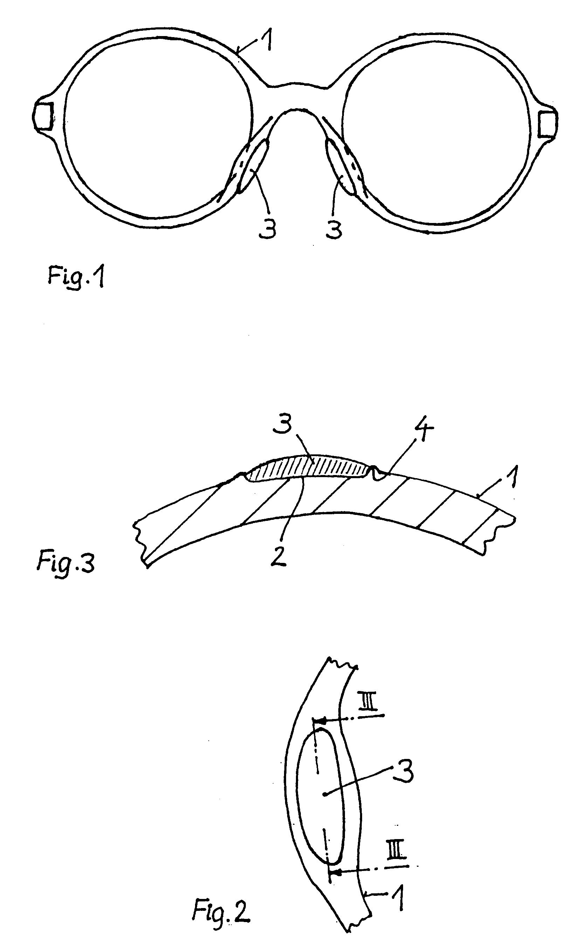

In der Innenansicht des Brillengestells 1 gemäß Fig. 1 sind die beiden Silikonkörper 3 dargestellt, durch welche die Brillenpads gebildet sind.

Die Fig. 2 und 3 zeigen in vergrößerter Darstellung den Padbereich des Brillengestells 1. Nach Reinigung der Vertiefung 2 mit Spiritus und dessen Abtrocknung wird auf der etwa waagrecht gehaltenen Vertiefung 2 eine (nicht gezeichnete) Grundierung mit dem Pinsel aufgetragen; nach deren Ablüften wird der Silikonkörper 3, bevorzugt mittels einer Kanüle aufgetragen, bis die Vertiefung 2 randvoll gefüllt ist. Danach läßt man das zähflüssige Silikon bei Raumtemperatur aushärten.

Selbstverständlich kann das Auftragen auch mit Hilfe eines Dosiergerätes erfolgen. Die konvexe Form des Silikonkörpers 3 ist von der Viskosität des verwendeten Silikons abhängig und damit steuerbar. Eine Abgrenzung des Auftragungsbereiches ist durch die Vertiefung 2 und deren Randwulst 4 vorgegeben. Letzterer entsteht durch Materialverdrängung beim Einprägen der Vertiefung 2 mittels eines 100°C bis 150°C warmen Metallstempels.

Vorliegend kommen insbesondere kalthärtende Silikonkautschukmassen in Frage, welche unter dem Einfluß von Luftfeuchtigkeit bei Raumtemperatur langsam polymerisieren.

## Patentansprüche

1. Verfahren zur Herstellung eines Brillengestells aus Kunstoff, das im Bereich der beiden Nasenstützen Vertiefungen aufweist, in welche flache, als "Pads" bezeichnete Silikonkörper eingelassen sind,
dadurch gekennzeichnet,
daß in den Vertiefungen eine Grundierung aufgetragen und daß anschließend fließfähige Silikonmasse in die Vertiefungen eingefüllt wird, mindestens bis die Vertiefungen randvoll gefüllt sind.

2. Verfahren nach Anspruch 1,
dadurch gekennzeichnet,
daß die Vertiefungen durch Warmumformen in das vorgefertigte Brillengestell eingebracht werden.

3. Verfahren nach Anspruch 2,
dadurch gekennzeichnet,
daß die Vertiefungen unter Ausbildung eines diese einfassenden Randwulstes in das Brillengestell eingeprägt werden.

4. Verfahren nach Anspruch 1,
dadurch gekennzeichnet,
daß Silikonmasse in einer solchen Menge in die Vertiefungen eingefüllt wird, daß die durch Aushärtung der Silikonmasse entstehenden Silikonkörper etwa linsenförmig ausgebildet sind und eine leicht konvexe Oberfläche aufweisen.

## Claims

1. Method of producing a plastics spectacle frame, which in the region of the two nose pieces comprises recesses, in which flat silicone members referred to as "pads" are let in, characterised in that a priming coat is applied to the recesses and that then fluid silicone material is introduced into the recesses, at least until the recesses are full up to the edge.

2. Method according to Claim 1, characterised in that the recesses are introduced by hot forming in the prefabricated spectacle frame.

3. Method according to Claim 2, characterised in that the recesses are impressed in the spectacle frame with the formation of a bead enclosing them.

4. Method according to Claim 1, characterised in that silicone material is introduced into the recesses in such a quantity that the silicone members resulting due to hardening of the silicone material are constructed approximately in the shape of a lens and have a slightly convex surface.

## Revendications

1. Procédé pour fabriquer une monture de lunettes en matière plastique, qui possède, dans la zone des deux plaquettes, des renfoncements, dans lesquels sont insérés des corps plats en silicone, désignés sous le terme "pads", caractérisé en ce qu'on dépose un apprêt dans les renfoncements et qu'ensuite, on introduit une masse de silicone fluide dans les renfoncements, au moins jusqu'à ce que les renfoncements soient remplis à ras bord.

2. Procédé selon la revendication 1, caractérisé en ce qu'on aménage les renfoncements par déformation à chaud dans la monture de lunettes préfabriquée.

3. Procédé selon la revendication 2, caractérisé en ce qu'on imprime les renfoncements en formant un rebord marginal entourant ces renfoncements, dans la monture de lunettes.

4. Procédé selon la revendication 1, caractérisé en ce qu'on introduit la masse de silicone en une quantité telle dans les renfoncements, que les corps en silicone, qui sont obtenus par durcissement de la masse de silicone, sont réalisés approximativement avec une forme de lentille et possèdent une surface légèrement convexe.
